# EUROPEAN PATENT APPLICATION

(11) **EP 4 837 723 A1**
(43) Date of publication of application: **11.11.2026**
(21) Application number: 25174366.2
(22) Date of filing: 06.05.2025
(51) Int. Cl.: B29C 53/50

(54) **TUBE MANIFACTURING DEVICE WITH CAMERA UNIT FOR PROCESS OPTIMIZATION**

(71) Applicant: EPL Poland sp. z o.o., 61-858 Poznan (PL)
(72) Inventor: Sosnicki, Tomasz, 30-059 Krakow (PL); Dworczak, Jacek, 61-858 Poznan (PL); Andrasz, Grzegorz, 61-858 Poznan (PL); Rzecki, Krzysztof, 30-059 Krakow (PL)
(74) Representative: Studio Torta S.p.A.

(57) **Abstract**

The invention relates to a tube manufacturing device (100) for providing tube bodies (20) in a tube manufacturing process, the device comprising a supply unit (1) for feeding one or more endless webs of tube material (14), a side seaming unit (2) for connecting opposite lateral portions (12a,b) of the endless web in order to form an endless tubular sleeve (13), a cutting unit (3) for cutting the endless tubular sleeve (13) in tube bodies (20) of predetermined length, an optional header unit (4) for connecting the tube bodies (20) to tube heads and/or shoulder parts, the device further comprises a camera unit (5) for capturing image data of the tube bodies (20), the camera unit (5) being arranged downstream of the cutting unit (3) and designed to capture images of cut sections (21a,b) of the endless tubular sleeve (13) and/or the tube bodies (20) and to provide corresponding image data, a processing and control unit (6) designed to process the captured image data and to control the manufacturing process of the device (100) based on the image data retrieved by the camera unit (5).

## Description

The present invention relates to a tube manufacturing device for manufacturing packaging tubes, the device comprising a camera unit for process optimization.

Devices for manufacturing packaging tubes or tubular bodies, particularly for use in the cosmetics, personal care, and related industries are known in the prior art. In general, these manufacturing devices are designed for producing tubular bodies or tube bodies from an endless web of one or more materials in a continuous process. This process may involve the steps of forming the endless web into a tubular shape, e.g. by forming it about a mandrel, hereby, bringing opposing longitudinal edges of the endless web together, with or without overlap, joining these edges together for example by means of welding in order to form an endless tubular sleeve with a seam, cutting this endless tubular sleeve in predefined sections in order to form individual tubular bodies of predefined length and optionally joining outlet elements such as a head and/or shoulder element to one end of the individual tubular bodies.

Traditional methods of producing packaging tubes often involve separate or semi-integrated systems for forming the tube body, affixing the head, and ensuring proper sealing. These processes can suffer from misalignments, material inconsistencies, and dimensional inaccuracies, leading to increased waste and higher production costs. Additionally, the rising need for customizable designs and materials, including eco-friendly and recyclable options, poses further challenges to existing manufacturing technologies.

A key factor affecting the quality of the packaging created with such tube bodies is the quality of the created seam, which is dependent on a variety of variables in the production process such as the velocity of endless sleeve, parameters of the joining of the material, and parameters of the cutting process.

Assessment of the seam quality is traditionally performed by human inspection, in particular via removal of tube bodies from the device after they have been cut from the endless sleeve, whereby the inspections may comprise inter alia visual assessments, thickness and/or width measurements, burst tests, and/or drop tests. This approach is however cumbersome and brings about disadvantages such as a low response to possible quality issues and thus a lower efficiency of the manufacturing process as well as the possibility of human errors. It is therefore desirable to enable a more autonomous assessment of the manufactured product and in particular the seam quality.

An automatic assessment of the seam quality has historically been difficult because many features contribute to the overall seam quality by varying degrees, such that programmatic algorithms, which cannot generalize well to cover all possible variations, are difficult to apply. Also, image processing required for such automatic assessment is very difficult during live production due to various factors, comprising inter alia the presence of machine components in the production line that obscure the formation of the seam, the difficulty of image capturing in particular of miniature features of a seam at high production speed and/or during continuous formation of the tubular sleeve or the tube bodies, the problem of effectively deriving relevant parameters from the captured images, and the problem of adaption to different tube material, tube sizes and/or seaming techniques.

WO 2024/079709 relates to a method for seam-welding a sheet in order to form a tubular body, the method relating to a real-time self-adaptive regulation of the welding parameters, based on in-line measurements of one or more characteristics of the seam weld during production and without stopping the machine. The measured characteristics of the weld may include the thickness or the width of a welded zone or features of aesthetic nature such as the absence of visual defects like air bubbles or cavities. Hereby, the variations of these welding characteristics is determined by comparison with reference characteristics and the adaptive regulation of the welding parameters is based on a digital model simulating the welding device.

EP 3 991 950 A1 relates to a method and apparatus for controlling a weld in an article made of a polymeric material based on an image analysis of the weld zones, wherein the method comprises the steps of acquiring an image of at least a portion of the article, processing the acquired image represented by a pixel matrix wherein intensity levels of each pixel are assessed to determine a quality parameter of the weld.

EP 4417934 A1 relates to a system and method for assessing the quality of a weld via an image of the end of the tubular body/pipe, where the cross-section of the weld is visible in the image. Hereby, the system and the method are specifically addressing the identification of a misalignment in the weld, wherein a secondary marker plate is provided to serve as a reference within the image.

Based on the known prior art, the present invention aims to provide an improved tube manufacturing device for manufacturing tube bodies, in particular a tube manufacturing device that enables an optimized control and a higher efficiency of the manufacturing process carried out by the device.

This object is solved by the subject-matter of the independent claim. The dependent claims relate to advantageous embodiments of the present invention. The present invention further seeks to address additional objects as will be apparent from the following detailed description of the invention.

In a first aspect, the invention relates to a tube manufacturing device for providing tube bodies from an endless web in a tube manufacturing process, the device comprising a supply unit for feeding one or more endless webs of tube material, a side seaming unit for connecting opposite lateral portions of the at least one endless web under formation of a seam region in order to form an endless tubular sleeve, a cutting unit for cutting the endless tubular sleeve in tube bodies of predetermined length, an optional header unit for connecting the tube bodies to tube heads and/or shoulder parts, the device further comprises a camera unit for capturing image data, the camera unit being arranged downstream of the cutting unit and designed to capture images of cut sections of the endless tubular sleeve and/or the tube bodies and to provide corresponding image data, the device further comprising a processing and control unit designed to process the captured image data and to control the manufacturing process of the device based on the image data retrieved by the camera unit.

The invention enables an efficient control of the manufacturing process of the device based on an autonomous visual assessment of the endless tubular sleeve and/or the tube bodies manufactured with the device.

As the assessment occurs automatically and without requiring a human expert a higher speed of assessment of the produced product, costs savings and a minimization of risks for human errors is obtained. The inventive arrangement further enables the usage of optical sensors means, thereby providing a relatively low complexity of the required sensor system while providing reliable results for the assessment of the product quality and which may then be used for control of the manufacturing process. Hereby, the capturing of the cut sections of the endless tubular sleeve and/or the respective tube body enables a very accurate assessment of the quality of the formed product and in particular of a seam region within the cut section. In addition, the positioning of the camera unit downstream of the cutting unit enables a facilitated and flexible arrangement of the camera unit while at the same time preventing the interference with further parts of the manufacturing process line of the device, thereby providing a high-quality imaging of the relevant features of interests and thus a high quality analysis of the manufacturing process.

The supply unit of the device may comprise a mandrel or other formation means in order to form the at least one endless web into a tubular shape. The supply may comprise a plurality of supply or transport reels by means of which the at least one endless web is supplied to the device and/or transported within the device.

The side seaming unit of the device preferably comprises welding means which connect two opposite lateral portions of a tubular shape endless web. The side seaming unit is preferably designed to contact the at least one endless web by means of welding, soldering, gluing, punching and/or stitching. In a particular preferred embodiment, the side seaming unit is designed to connect the two lateral portions via welding a continuous stripe in which the two lateral portions overlap. Alternatively, the two lateral portions may be joined or welded together via butt-welding.

The cutting unit of the device preferably comprises one or more blade elements that are arranged to repeatedly cut a longitudinal tubular portion of the endless tubular sleeve, thereby forming successive tube bodies of predefined length which can then further be processed within the device.

The optional header unit is preferably designed to join a respective tube body to a tube head and/or a shoulder part which may be fed to the header unit from a respective supply unit of the device.

The camera unit of the device preferably comprises at least one or more image capturing devices capable of capturing images or capturing or recording video images. The at least one image capturing device preferably comprises a digital camera with a CCD or CMOS imaging sensor. The camera unit may be designed for monochrome or colour imaging. The camera preferably comprises a high resolution and light sensitivity. The camera unit preferably comprises an optical assembly having a lens system with adjustable focal length and aperture for capturing images under varying lighting and distance conditions. The aperture and/or shutter of the camera unit may be designed for high speed actuation, comprising a preferred shutter time of between 10us and 1ms.

In a preferred embodiment, the lens of the digital camera has a fixed focal length. The optical assembly may comprise filter means, e.g. for spectral imaging. Further, the camera unit may comprise a macro-objective designed for capturing high resolution images. Further, the camera unit is preferably configured to capture images in real-time and provide the respective image data to the processing and control unit, allowing for immediate feedback and control within the production process. The camera unit preferably further comprises software and/or hardware components designed for delivering instructions to the image capturing devices, for example to capture image data, as well as for performing any required initial processing of the image data.

The term "endless web" refers to a continuous sheet or strip of material that is supplied or fed to the manufacturing device without a defined end, allowing for uninterrupted production. The web can be made of various materials, and may be in particular a laminate material, preferably a polymer-based or a paper-based laminate material. The web may as well be made from plastic, paper, metal, or fabric, and is further designed to be shaped into a tube. More than one web of specific material may be fed to the device by the supply unit. When forming the tubular sleeve, the endless web may be folded and connected along its edges, or multiple webs may be combined and joined to create the desired tubular sleeve.

The term "endless tubular sleeve" refers to a continuous, cylindrical structure formed when the two opposing lateral portion, or edges, of the at least one endless web of material are brought together and connected along their length. The tubular sleeve serves as the base structure for further processing and in particular cutting of the sleeve into tube bodies of predefined length.

The term "seam region" refers to the specific area where the two opposing portions or edges of the material, or more specifically of the endless web have been joined during the manufacturing process by the side seaming unit. This region thus represents the connected and in particular the welded section that ensures the structural integrity and continuity of the endless tubular sleeve and of the individual tube bodies cut from the sleeve.

The term "downstream" of a particular unit of the device refers to the position of the component or a process that is located after a particular unit within the sequence of operations within the device.

The term "cut section" refers to the specific cross-sectional area of an endless tubular sleeve or tube body that is created or exposed as a result of a cutting process of the endless tubular sleeve. When the tubular sleeve is cut, i.e. fully severed, the cut section represents the surface of the material that forms the boundary of the cut edge. The cut section lies preferably in a plane perpendicular to the axial direction of the tubular sleeve or tube body.

In a preferred embodiment, the camera unit is arranged to capture at least one image of a respective front portion and/or rear portion of each individual tube body. More preferably, the camera unit is preferably arranged to capture an image of a respective cut section at the front portion and/or the rear portion of each individual tube body. Further preferred, the camera unit is arranged to capture at least one image of a cross-section of the respective seam region in a front cut section and/or a rear cut section. This configuration enables the capturing of an unobscured, clear and detailed visual data of the front and/or rear portion, or more specifically, the cut section at the front and/or rear portion of each tube body as the tube body moves through the production line. By focusing on the front and/or rear portion, the camera unit provides precise and actionable data specific to this critical area of the tube body.

In a preferred embodiment, the camera unit is designed to operate synchronized with at least one further unit of the device, preferably at least with the cutting unit. Hereby, the camera unit may be designed to operate in such a way that the moment of image capturing *tₚ* by the camera unit is synchronized with the moment of cutting t_{c} carried out by the cutting unit. Preferably, the camera unit may be arranged to capture the image data dependent on an operation of the cutting unit and may particularly be designed to capture the image data before, during and/or after a cutting of each successive tube body is carried out by the cutting unit.

Before each cutting operation, the camera unit may capture an image of the free end portion, or alternatively named, the front portion of the endless tubular sleeve. During each cutting operation the camera unit may capture an image of the free end portion of the tubular sleeve as well as real-time image data, e.g. to monitor the dynamic cutting operation, thereby providing feedback on cutting accuracy, potential deviations, or malfunctions. After each cutting operation the camera unit may capture an image of a rear end portion, or alternatively named, the rear portion of the manufactured tube body, which rear end is arranged opposite to the front portion of the tube body formed by cutting the endless tubular sleeve.

In a preferred embodiment, the camera unit is located between the cutting unit and the optional header unit and is further designed to capture image data during the transportation of the tube body to the header unit. Hereby, the camera unit may capture an image of the respective front and/or rear portion of each individual tube body during transportation of the tube body. Hereby, the camera unit may be designed to move along predefined motion paths within the device. In particular, the camera unit may be arranged to move together with the transported tube body, preferably at the same speed and/or angular orientation as the tube body in order to capture image data of the tube body during the transportation of the tube body in the device.

In a preferred embodiment, the camera unit comprises one or more lenses with the required focal lengths suited for capturing images of features on or near to the cut sections of the endless tubular sleeve and/or the tube body.

The camera unit preferably further comprises one or more mirrors for redirecting and/or deflecting light from the cut sections of the endless tubular sleeve and/or the tube bodies to an image capturing device of the camera unit. The at least one mirror may be movable and may be synchronized to the movement of the tube body in the device. Such arrangement allows for a fixed positioning of an image capturing device of the camera unit, thereby minimizing the movable mass in the device.

In a preferred embodiment, the camera unit comprises at least one movable support for an image capturing device and/or at least one mirror of the camera unit, which is preferably designed to carry out a translational and/or rotational movement synchronized to the movement of the tube body, in particular during an exposure time in the device. The support is preferably designed to enable controlled movement of the image capturing device and/or a mirror along one or more axes, such as vertical, horizontal, or rotational, in order to adapt to different operational requirements. The movable support of the camera unit may comprise features such as rails, tracks, pivot points, and/or motorized actuators to enable an accurate movement. The moveable support may be controlled to reposition the image capturing device and/or at least one mirror unit dynamically in synchronization with the production line's operation, ensuring consistent monitoring and image capture for each successive tube body. Additionally, the support may be designed to allow for adjustments during setup or maintenance to accommodate changes in the manufacturing line or tube specifications.

In a preferred embodiment, the camera unit is designed to capture image data when a respective front cut section and/or rear cut section and preferably the cross-section of a side seam region in a front cut section and/or a rear cut section of the tube body is located in a focus plane of an image capturing device of the camera unit. Hereby, the focus plane or the focal length of the camera unit may be fixed, such that high quality image date may be captured without adaptation of the focal length during the manufacturing process.

The image capturing device of the camera unit may be designed to provide an image resolution of a front and/or rear portion of each tube body, and in particular of a side seam region of the tube body of preferably higher than 200 px x 50 px. Accordingly, high quality image data for the front and/or rear portion of the tube body and in particular of the seam region may be captured.

In a further embodiment, the camera unit comprises an additional image capturing device such as e.g. an additional digital camera, which is designed to capture secondary image data in particular of a seam side surface for the detection of printing defects such as cracks or other surface defects. It is thus enabled to capture additional image data relating not only to a cross sectional view of a front and/or rear portion of the individual tube body, but also to a side surface and/or to a top view onto a seam region. Thereby, the additional image capturing device may be arranged essentially perpendicular to or inclined relative to an axial direction of the tube body or the endless tubular sleeve.

In a preferred embodiment, the device may further comprise a removal unit able to prevent tube bodies from being further processed in the device. Hereby, the removal unit is preferably designed to be controlled in response to a feedback or control signal of the processing and control unit. The removal unit may thus remove tube bodies that do not comply with predefined quality features and/or for which defects or undesired deviations are identified.

In a preferred embodiment, the device further comprises a visualisation unit designed for displaying images and associated meta data of the captured image data. The visualisation unit may be further designed to act as a data interface to additional units of the device. Hereby, the images and associated meta data may be visualised to a human operator and/or may be provided for further processing to additional units of the device and/or to associated systems. For example, the images and associated meta data may be provided to a local or remote data server designed for storing and/or processing the data.

In a preferred embodiment, the device further comprises at least one lighting unit designed to illuminate the endless tubular sleeve and/or a respective tube body cut from the sleeve. Hereby, the lighting unit is preferably designed for illuminate specific sections of the tube body or tubular sleeve, in particular the cut sections, or more specifically, the cross-sections of the cut sections of the respective tube body for ensuring optimal conditions for image capturing by the camera unit. In a particularly preferred embodiment, the lighting unit is configured to provide uniform and/or high-intensity illumination, thereby minimizing shadows, reflections, and/or uneven lighting that my compromise the accuracy and quality of the captured image data.

The lighting unit may as well be designed to illuminate further portions of the endless tubular sleeve and/or the tube body such as the front or rear portion in general, a side seam region, or other areas of interest of the endless tubular sleeve and/or a respective tube body.

The lighting unit may include one or more elements capable of producing light (light sources), which may comprise one or more LEDs, OLEDs, laser diodes, filament bulbs or any other suitable light-emitting elements. The lighting unit may as be designed for providing stroboscopic lighting for capturing high-speed images, colour-adjustable lighting for enhanced contrast, and/or polarized light to reduce glare on reflective surfaces. The lighting unit may further comprise a diffuser and/or an optical lens in order to provide for even light distribution and/or to control the direction, angle, and/or intensity of the emitted light.

The lighting unit may further comprise software and/or hardware required for delivering instructions to and altering properties of the light emitting elements of the lighting unit. These properties may comprise inter alia a specific point of time to provide illumination, a duration of illumination, a light intensity, a light colour value and/or a strobe frequency. Furthermore, the light properties may be adapted temporarily and/or may be synchronized with actions of other units or parts of the device such as the camera unit and/or the cutting unit.

The lighting unit may further comprise a movable mount, enabling precise adjustment of the light sources of the lighting unit. Hereby, the lighting unit may, in some embodiments, be capable of moving the light sources with, for example, a translational motion. Preferably, the motion of the movable mount and thus of the light sources may be synchronized with other units or parts of the device, such as the movement of the tube body and/or the endless tubular sleeve.

The device may further comprise a human-machine interface, or alternatively named, a user interface, which is preferably for two-way interaction between a human operator and the tube manufacturing device. The interface is preferably designed to present warnings to a human operator, to present values such as current or historic classification outcomes, as well as current process parameters to a human operator, to present suggested new process parameters to a human operator, to allow a human operator to initiate the production process, and/or to allow a human operator to change process parameters.

The processing and control unit of the device is designed to process the captured image data and to control the manufacturing process of the device based on the image data retrieved by the camera unit. In particular, the captured image data may be used by the processing and control unit in order to e.g. identify deviations from a previously specified design, to improve manufacturing accuracy, and/or to ensure product consistency.

In a preferred embodiment, the process and control unit is designed to process the image data via artificial intelligence or machine learning algorithms in order to identify visual features indicative of a seam quality of the respective tube bodies, and to utilize said visual features to classify the tube bodies and in particular the respective seam quality at the moment the image was taken.

In particular, the processing and control unit is preferably designed to process the captured image data alongside additional data such as current process parameters, benchmark image data, and/or predefined product quality image data in order to perform (or calculate) a classification of the captured image data.

Such classification may, for example, comprise of one of the following:
- a binary good/poor classification, indicating whether the seam region in any given example of image data is of acceptable quality or not,
- a multivariable binary classification, indicating, for example, for one or more features of the manufactured tube bodies, whether each individually is acceptable or not,
- a non-binary value or "score", e.g. a value between 0 and 1, scoring the overall quality of the seam region and/or of the product, or
- a multivariable non-binary classification, e.g. a value between 0 and 1 scoring quality of one or more individual features of the manufactured tube bodies.

The processing of the image data and the calculation of the classification value based thereon may be carried out by use of known image analysation algorithms and/or by use of artificial intelligence, in particular by use of a neuronal network capable of generating a classification outcome when provided with the respective image data. The neuronal network may have correspondingly been pre-trained in a supervised or unsupervised manner.

Based on the calculated classification value, the processing and control unit may then control the manufacturing unit, in particular to obtain an optimized output of the manufactured product.

For example, in case a classification outcome for a particular tube body or a series of successive tube bodies is not in line with a predefined quality standard, the device may remove the respective tube bodies from further processing within the device, for example by means of the removal unit of the device.

In addition and/or alternatively, the processing and control unit may adapt process parameters of the device based on the classification outcome of the analyzation of the image data. For example, the processing and control unit may be designed to adapt one or more process parameters, preferably within predefined tolerances, based on the classification outcome in order to optimize the overall performance of the manufacturing process. Hereby, an automatic feedback loop may be provided within the device in order to optimize the product quality of the manufactured tube bodies.

The respective process parameters may include one or more of the following: positioning of laminate edges, seam position, temperature and/or welding power of the side seaming unit, applied pressure onto the seam during and/or after the welding process within the welding unit, a cooling rate and cooling intensity provided to the seam region after the welding side seaming unit, a velocity of the supply unit, and/or a blade velocity of the cutting unit.

The processing and control unit may be further designed to output a visual and/or audible warning to a human operator of the device via a provided human-machine interface, in case the classification outcome deviates from predefined tolerance values and/or in case a classification is changing over time, e.g. is getting worse within a predefined time period.

In a further aspect, the invention relates to a method for preferably continuously manufacturing tube bodies from at least one endless web of material, the method comprising the steps of:
- supplying at least one or more endless webs of tube material to a tube manufacturing device,
- forming an endless tubular sleeve by connecting opposite lateral portions of the at least one endless web under formation of a seam region,
- cutting the endless tubular sleeve into tube bodies of predetermined length,
- capturing an image of at least one cut section of the endless tubular sleeve and/or the tube bodies and provide corresponding image data,
- processing of the captured image data, and
- controlling parameters of the manufacturing process based on the processed image data.

The method of the invention preferably relates to a tube manufacturing process carried out by the tube manufacturing device of the invention as described above. In order to avoid unnecessary repetitions, full reference is made to the disclosure of the device according to the invention hereabove, wherein all features disclosed in the context of the device of the invention shall be understood as being also disclosed for the method of the invention and vice versa.

A preferred embodiment of the method and process steps carried out by the device of the invention is described in the following.

A human operator may initiate the tube manufacturing process, e.g. by using a provided user interface of the tube manufacturing device. The human operator may at this stage define an initial set of process parameters. Alternatively, the process may start with default values for the process parameters.

The supply unit of the device begins feeding of the one or more endless webs to the side seaming unit of the device. The side seaming unit connects the opposite lateral portions of the endless web to form the endless tubular sleeve upon creating of a seam region. The endless tubular sleeve is fed to the cutting unit at which it is cut into tube bodies of predetermined length. These steps of the supply unit, the side seaming unit and the cutting unit constitute the main production process steps of the tube manufacturing process and are repeatedly continued until actively stopped, either by another system component, or by a human operator.

Optionally, the tube bodies may be accelerated after the cutting, e.g. by means of a dedicated tube promoter unit. The tube promoter unit may perform the acceleration via blowing of air intermittently or by alternative means. This has the advantage that the camera unit of the device has a reliably clear view of the cut section of the front portion of the next tube body and/or the endless sleeve. The acceleration of the tube bodies is preferably synchronized with the cutting and/or camera unit.

At least on image is captured by the camera unit in order to retrieve corresponding image data of the cut sections. Hereby, the camera unit may capture image data of the cut sections of either end of a tube body, the cut section at the end of the endless sleeve, or both. The camera unit may further capture the image data in synchronization with the cutting unit, i.e. images are captured at a time which is a function of the cutting time, such that the cut section is in a specific position for image capture. The camera and/or mirrors of the camera unit may further be in motion during the capture of the image data, whereby said motion is preferably synchronized with the motion of the tube body and/or endless tubular sleeve. During the image capturing, the lighting unit may illuminate the cut surfaces during the capture of the image data. Thereby, the lighting unit may provide illumination continuously or may provide synchronize light emission with the capture of the image data.

Optionally, additional tests may be performed e.g. on the tube bodies and/or the endless tubular sleeve, such as e.g. burst tests, according to predefined protocols, and after which additional test data may be outputted. Specifically, in addition to a visual assessment of a seam region to determine its quality, other assessments may take place on the same production line to assess seam quality. For example, burst testing may be performed to determine the force at which the seam breaks, and, more specifically, if this burst force is within predefined acceptable ranges.

In an optional step, the manufactured tube bodies are passed to the optional header unit for connecting the tube bodies to tube heads and/or shoulder parts.

The captured image data, and optionally the additional test data, preferably as well as current process parameters of the manufacturing process are transmitted to the processing unit.

The processing and control unit then processes the provided data, thereby generating a classification outcome, or alternatively named, a classification value. This may comprise the following steps:
A feature extraction algorithm runs on the image data and, if provided, the optional data to output a set of feature vectors. For example, the algorithm may follow a predefined set of steps, including:
- cropping of the received image data to just the area of interest (i.e. the seam region in the cut section, or more specifically, the captured cross-section,
- performing edge detection to identify the contours of the seam region revealed in the cut section,
- identifying a set of areas (i.e. regions of the image) which contain relevant information characteristic of the weld, based on the identified edges, and
- performing pixel-based measurements of the image features within the areas, to output the set of features.

For this feature extraction algorithm one or more instances of image data may be utilized here, such that the feature vectors may represent an average over many instances of image data.

Next, a classifier algorithm is preferably run on the feature vectors to output a classification outcome. As previously described, the classification outcome may be e.g. a binary or non-binary classification value for either the tube bodies as a whole or specific features of the manufactured tube bodies.

Based in the classification outcome the processing and control unit generates instructions for other units or entities of the tube manufacturing device to take any actions in response.

Optionally, a processing parameter adjustment algorithm is run on the classification outcome to generate a set of modifications to the process parameters of the manufacturing device. The process parameters of the tube manufacturing device may then be updated to the new values. The modification of process parameters may thereby only be triggered once the classification outcome has reached a certain threshold, e.g. relating to a negative quality criterion or "badness", beyond which modifications must be made.

Optionally, a warning trigger algorithm is run on the classification outcome to determine if a warning is necessary. If this is the case, a warning, e.g. in the form of a visual, audible and/or tactile warning signal or in any other suitable form, may be outputted to a human operator. Further, a classification outcome may be presented, e.g. visually displayed to a human operator of the device, in particular by means of a provided user interface.

Optionally, a reject tube algorithm may be initiated which controls the tube body rection unit, which is thus controlled to remove corresponding tube bodies from the production line.

The above-indicated process steps relate to a preferred embodiment and do not necessarily have to be carried out in the specific order indicated. In particular, the process steps may as well be carried out in a different order.

Further features, details and advantageous effects of the present invention are explained below with reference to exemplary and purely schematic embodiments of the invention.
- **Fig. 1**: relates to a schematic depiction of a preferred embodiment of the device according to the invention;
- **Fig. 2a,b**: relates to a top and side view of an endless web of material being forming it into an endless tubular sleeve;
- **Fig. 3a,b**: relate to a side view and a front view onto a tube body manufactured by the device according to the invention;
- **Fig. 4**: relates to a schematic depiction of the cutting unit in interaction with the camera unit; and
- **Fig. 5**: relates to a side view onto the camera unit of the device according to a preferred embodiment of the invention.

In the following Identical elements or elements with the same function are referred to by the same reference symbols in the figures.

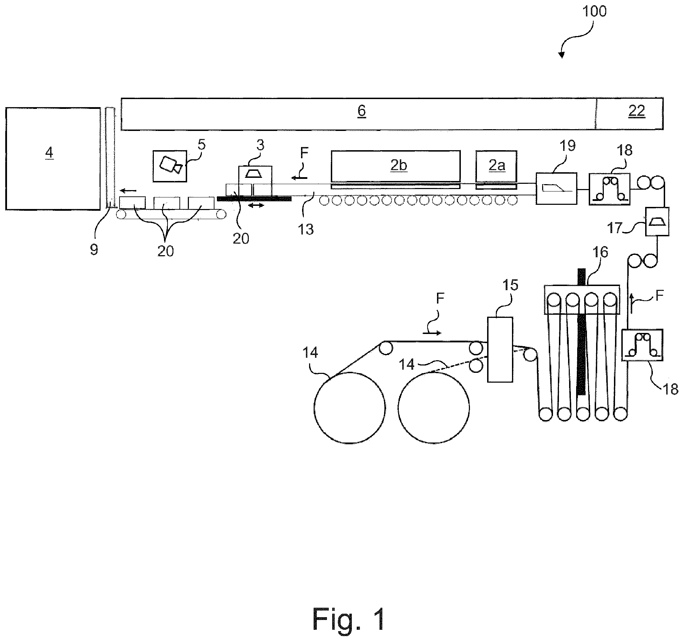

**Fig. 1** relates to a schematic depiction of a preferred embodiment of the device 100 according to the invention. The device 100 comprises a supply unit 1 for feeding one or more endless webs of tube material 14, e.g. a plastic, metal, textile or laminate web, to the device. Hereby, the tube material 14 is driven in a conveying direction.

The supply unit 1 may further comprise a splicing station 15 for joining the end of an expiring material web 14, e.g., an endless strip of material, to the beginning of a new material web. Further, the supply unit 1 may comprise accumulator station 16 for temporarily storing and managing material, ensuring continuous operation during processes such as material roll changes, splicing, or other temporary disruptions, thereby acting as a buffer system that maintains the flow of material or tube bodies without stopping or slowing down the entire production line. The supply unit 1 may further comprise a trimming station 17 for precisely cutting or smoothing the lateral edges of a material web 14 before it is further processed. The supply unit 1 may further comprise alignment stations 18 for ensuring that the material is precisely and correctly positioned as it enters the subsequent production process.

The supplied material is fed to a forming station 19 which is designed to shape or form the flat material web 14 into a desired cylindrical or tube-like shape that serves as the basis for the final tube body.

The device 100 further comprises a side seaming unit 2 downstream of the forming station 19 and designed for connecting opposite lateral portions 12a,b of the endless web 14 under formation of a seam region 10 in order to form an endless tubular sleeve 13. Notably, the forming station 19 may as well be part of the side seaming unit 2. The seaming unit 2 preferably comprises a welding device 2a for welding the two opposite lateral portions 12a,b. Downstream of the welding device 2a, the seaming unit 2 preferably comprises a cooling device 2b for cooling the welded zone, or alternatively phrased, the created seam region 10.

The device 100 further comprises a cutting unit 3 for cutting the endless tubular sleeve 13 in tube bodies 20 of predetermined length. The cutting unit 3 preferably comprises at least one cutting device such as a rotary cutting knife. The cutting unit 3 and/or its cutting device are preferably designed such that they move relative to the continuously fed endless tube 13 in at least one section of the production line, in particular perform a translatory movement M1.

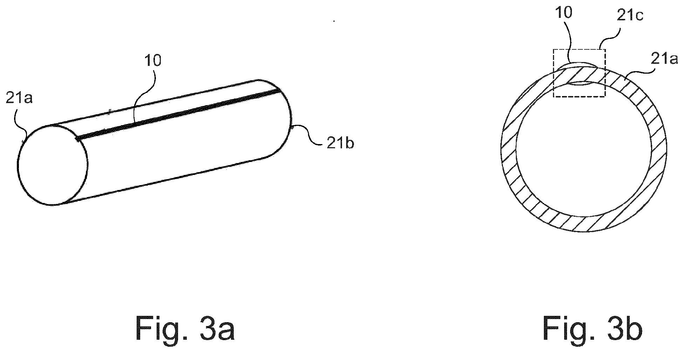

Downstream of the cutting unit 3, the device 100 further comprises a camera unit 5 designed to capture images of cut sections 21a,b (see e.g. Fig. 3a,b) of the endless tubular sleeve 13 and/or the tube bodies 20 and to provide corresponding image data.

The manufactured tube bodies 20 may then be conveyed from the cutting unit 3 to an optional header unit 4 for connecting the tube bodies 20 to tube heads and/or shoulder parts (not shown).

The device 100 further comprises a processing and control unit 6 designed to process the captured image data of the camera unit 5 and to control the manufacturing process of the device 100 based on the image data retrieved by the camera unit 5. The device 100 may further comprise a user interface 22, such as a graphical interface or a screen with associated input and/or output devices, thereby constituting a human-machine interface. The user interface 22 may be part of the processing and control unit 6 and/or may be provided as a separate and/or mobile entity.

The device 100 preferably further comprises a removal unit 9 able to prevent tube bodies 20 from being further processed in the device 100, the removal unit 9 being designed to be controlled in response to a feedback signal of the processing and control unit 6.

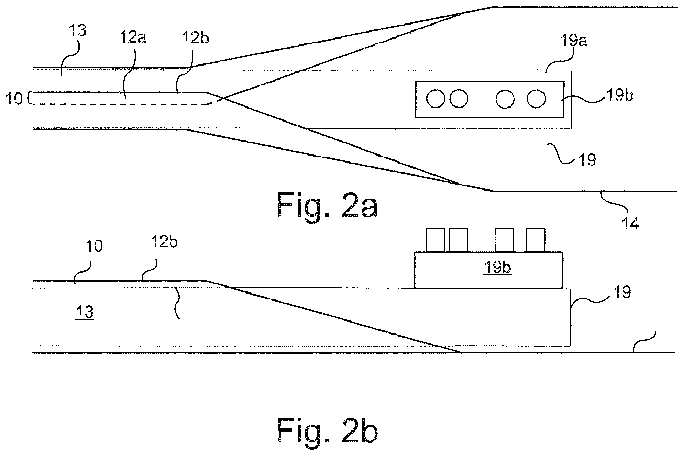

**Fig. 2a,2b** relate to a top and side view onto a schematic representation of the forming station 19 which is designed to shape or form the flat material web 14 into a desired cylindrical or tube-like shape, whereby the opposite lateral portions 12a,b of the endless web overlap in top view.

The forming station 19 preferably comprises a mandrel 19a extending in the longitudinal direction of the cylindrical tubular sleeve 13 to be formed, whereby it is supported in the device by means of a dedicated suspension or support device 19b.

The overlapping lateral portions 12a,b are then joined by the side seaming unit 2 (not shown in fig 2a,b), thereby forming the seam region 10.

**Fig. 3a** shows a manufactured tube body 20 with a seam region 10 extending in longitudinal, or, alternatively phrased, axial direction of the tube body 20. At the front end, the tube body 20 comprises a front cut section 21a. At the opposing rear end, the tube body 20 comprises a rear cut section 21b. These cut sections 21a,b thereby refer to the specific cross-sectional area of an endless tubular sleeve 13 or tube body 20 that is created or exposed as a result of a cutting process of the endless tubular sleeve 13. As shown in **Fig. 3b****,** a portion 21c of the respective cut sections 21a,b relates to the cross-sectional area of the seam region 10.

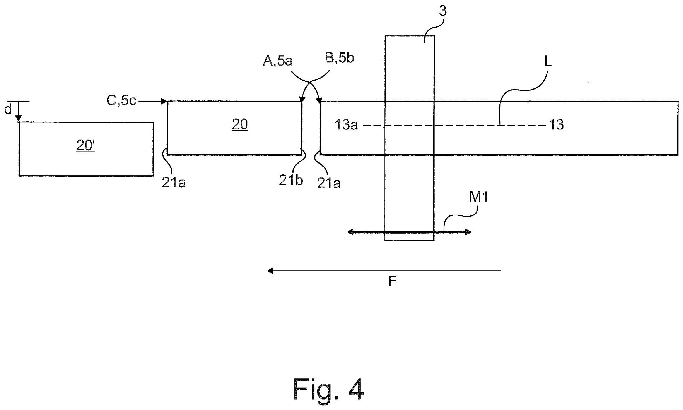

**Fig. 4** relates to a schematic arrangement of the cutting unit 3 with respect to the camera unit 5. As shown in this figure, the endless tubular sleeve 13 is continuously fed to the cutting unit 3 in conveying direction F. The cutting unit 3 thereby undergoes a translational movement back and forth along the tubular sleeve 13, parallel to the conveying direction F, thereby operating at least one cutting device such as a rotary blade (not shown) in order to cut tube bodies 20 of predefined length from a front portion 13a of the endless tubular sleeve 13. The shown tube bodies 20,20' in this figure relate to successive tube bodies cut from the endless tubular sleeve 13 and which are further conveyed in conveying direction F of the device 100 after cutting. As also shown in the figure, tube body 20' may be slightly deflected from the conveying direction F, and may e.g. drop a predefined distance d in side view, compared to the following tube body 20, e.g. in order to provide a clear view of the camera unit 5 onto the front portion of the successive tube body 20 (see arrow C).

The arrows A,B,C in this figure relate to preferred camera positions or possible capturing directions of the camera unit 5 for capturing images of cut sections 21a,b of the endless tubular sleeve 13 and/or the created tube bodies 20.

For example, arrow A relates to a camera capturing direction wherein the camera unit 5 is arranged to capture an image of the front portion 13a of the endless tubular sleeve 13. The camera unit 5 may hereby be arranged slightly inclined downwards onto the production line, or more specifically, onto an longitudinal or axial direction L of the endless tubular sleeve 13. The camera unit thereby captures an image of a front cut section 21a of the front portion 13a of the endless tubular sleeve 13.

Arrow B relates to a camera capturing direction wherein the camera unit 5 is arranged to capture an image of the rear portion of the manufactured tube body 20, cut from the front portion 13a of the endless tubular sleeve 13. The camera unit 5 may hereby be arranged slightly inclined downwards onto the production line, or more specifically, onto a longitudinal or axial direction L of the endless tubular sleeve 13 or of the tube body 20. The camera unit thereby captures an image of a rear cut section 21b of the tube body 20.

Arrow C relates to a camera capturing direction wherein the camera unit 5 is arranged to capture an image of the front portion of the manufactured tube body 20, cut from the front portion 13a of the endless tubular sleeve 13. The camera unit 5 may hereby be arranged to directly face the tube body 20 in longitudinal or axial direction L. The camera unit thereby captures an image of a front cut section 21a of the tube body 20.

The described capturing directions A,B,C are preferred examples for an arrangement of the camera unit 5 with individual image capturing devices 5a,b,c of the camera unit 5 with respect to the cutting unit 3 and the cut tube bodies 20. The camera unit 5 may as well be arranged differently with respect to the endless tubular sleeve 13 and/or the cut tube bodies 20. Moreover, the camera unit may as well comprises one or more mirrors (not shown) for redirecting and/or deflecting light, i.e. the described capturing directions A,B,C, from the cut sections 21a,b to the respective individual image capturing devices 5a,b,c of the camera unit 5. Further, the camera unit 5 may comprise more or fewer image capturing devices 5a,b,c. Particularly preferred, the camera unit 5 is arranged to capture at least a portion 21c of the respective cut sections 21a,b relating to the cross-sectional area of the seam region 10 as shown in fig. 3b.

The camera unit 5, or, more specifically, the individual image capturing devices 5a,b,c of the camera unit 5 are designed to operate synchronized the cutting unit 3 in such a way that the moment of image capturing *t_{ρ}* by the respective mage capturing devices 5a,b,c of the camera unit 5 is synchronized with the moment of cutting *t_{c}* carried out by the cutting unit 3. Hereby, the individual image capturing devices 5a,b,c of the camera unit 5 may capture the image data dependent on an operational state of the cutting unit, in particular before, during and/or after a cutting of each successive tube body 20 is carried out by the cutting unit 3.

In addition, the camera unit 5 may be designed to capture an image data of the tube body 20 when being transferred to the optional header unit 4 of the device 100. The camera unit 5 may further comprise an additional image capturing device (not shown) designed to capture secondary image data in particular of a seam side surface, e.g. in top view onto the seam region 10, perpendicular to the axial direction L, for the detection of printing defects such as cracks or other surface defects.

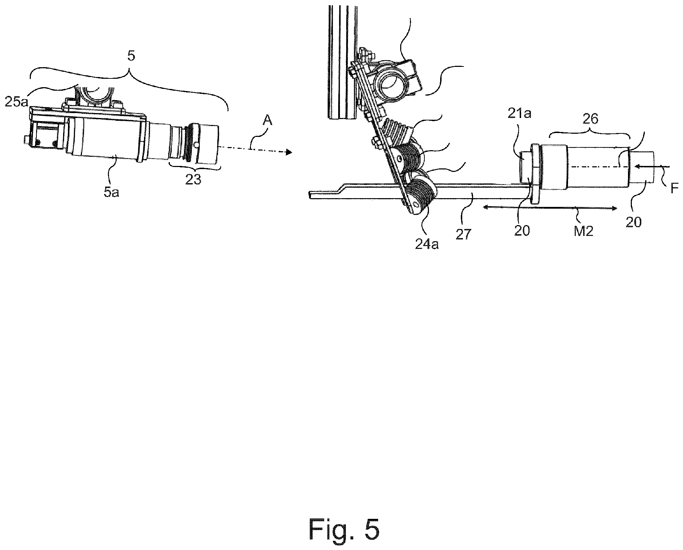

**Fig. 5** relates to a side view onto the camera unit 5 of the device 100. The camera unit 5 comprises an image capturing device 5a, in particular a digital camera or digital video camera. The camera unit 5 may further comprise a lens system 23 with one or more lenses having a focal length suited for capturing images of features on or near to the cut sections 21a,b of the endless tubular sleeve 13 and/or the tube body 20. An image capturing path A of the camera unit 5 is slightly inclined downward relative to a longitudinal axis L of the tube body 20.

The device 100 may further comprise a lighting unit 24 designed to illuminate the endless tubular sleeve 13 and/or a respective tube body 20 cut from the sleeve 13, preferably the cut sections 21a,b thereof. The lighting unit 24 may comprise one or more illumination elements 24a-d which may comprise one or more LEDs, OLEDs, laser diodes, filament bulbs or any other suitable light-emitting elements. Thereby, the lighting unit 24 may be designed for providing stroboscopic lighting for capturing high-speed images, colour-adjustable lighting for enhanced contrast, and/or polarized light to reduce glare on reflective surfaces. The lighting unit 24 may further comprise diffusers and/or an optical lenses (not shown) in order to provide for even light distribution and/or to control the direction, angle, and/or intensity of the emitted light.

The camera unit 5 and/or the lighting unit 24 are preferably mounted within the device 100 by dedicated mounting devices 25. The mounting devices 25a,b may be designed for providing a stable arrangement and/or a movement, such as e.g. a translatory and/or rotational movement of the respective entity mounted thereon. Hereby, the mounting devices 25a,b may comprise dedicated rails, tracks, pivot points, and/or motorized actuators.

As shown in the right portion of fig. 5, a tube body 20 cut from the endless tubular sleeve 13 is provided from the cutting unit 3 in conveying direction F of the manufacturing process. The tube body 20 is thereby fed through a tubular support section 26. At the shown position, the camera unit 5 captures an image of the front cut section 21a of the tube body 20, and more preferably at least of a portion 21c of the respective cut sections 21a relating to the cross-sectional area of the seam region 10 as shown in fig. 3b.

The tubular support section 26 is connected to a guiding tray 27 into which the tube body 20 is fed in conveying direction F, preferably after capturing of the image data by the camera unit 5. The tubular support section 26 and the guiding tray 27 may be intermittently moved back and forth along direction M2, in parallel to the conveying direction F.

Upon leaving the support section 26, for example due to the next incoming cut tube body 20 and/or due to the intermittent movement of the tubular support section 26, the tube body 20 is transferred to the guiding tray 27, in which the tube body 20 is preferably arranged offset from an axial direction L of the tube body 20 in the support section 26. In particular, the tube body 20 may drop by a distance d (see indication in Fig. 4), e.g. in order to enable a free view of the camera unit 5 onto the front cut section 21a of the next tube body 20 held within the support section 26.

Feeding of the tube bodies 20 in the support section 26 and/or in the guiding tray 27 may be additionally supported by dedicated acceleration means (not shown), such as e.g. an air vent or a similar entity, which is designed to intermittently provide an air stream onto the respective tube body 20, thereby moving and/or accelerating the tube body 20 in conveying direction F within the tubular support section 26 and/or the guiding tray 27.

The image data captured by the camera unit 5 is then be processed by the processing and control unit 6 of the device 100 in order to control the manufacturing process of the device based on the image data retrieved by the camera unit.

Hereby, the processing and control unit 6 may e.g. identify tube bodies 20 of inferior quality and may control the removal unit 9 in order to remove such tube bodies 20 from the production line. Further, the processing and control unit 6 may adapt process parameters of the manufacturing device 100 in order to e.g. address features and/or quality defects detected in the analysed data, in particular to improve manufacturing accuracy. In addition, the processing and control unit 6 may issue

The processing and control unit may be further designed to output a visual and/or audible information, image data and/or warning signals to a human operator of the device via a provided user interface.

### Reference numerals

- 1: supply unit
- 2a,b: side seaming unit
- 3: cutting unit
- 4: header unit
- 5: camera unit
- 5a,b,c: image capturing device
- 6: processing and control unit
- 9: removal unit
- 10: seam region
- 12a,b: opposite lateral portions
- 13: endless tubular sleeve
- 13a: front portion of tubular sleeve
- 14: endless web of tube material
- 15: splicing station
- 16: accumulator station
- 17: trimming station
- 18: alignment station
- 19a,b: forming station
- 20, 20': tube bodies
- 21a,b: cut sections
- 21c: cross-sectional area of seam region
- 22: user interface
- 23: lens system image capturing device
- 24: lighting unit
- 24a-d: illumination elements
- 25a,b: mounting devices
- 26: tubular support section
- 27: guiding tray
- 100: tube manufacturing device

- A,B,C: camera capturing directions
- D: drop distance
- F: conveying direction
- L: longitudinal/axial direction
- M1: movement cutting unit
- M2: movement support section

## Claims

1. A tube manufacturing device (100) for providing tube bodies (20) in a tube manufacturing process, the device comprising:
a supply unit (1) for feeding one or more endless webs of tube material (14),
a side seaming unit (2) for connecting opposite lateral portions (12a,b) of the endless web under formation of a seam region in order to form an endless tubular sleeve (13),
a cutting unit (3) for cutting the endless tubular sleeve (13) in tube bodies (20) of predetermined length,
an optional header unit (4) for connecting the tube bodies (20) to tube heads and/or shoulder parts,
the device further comprises a camera unit (5) for capturing image data of the endless tubular sleeve (13) and/or the tube bodies (20),
the camera unit (5) being arranged downstream of the cutting unit (3) and designed to capture images of cut sections (21a,b) of the endless tubular sleeve (13) and/or the tube bodies (20) and to provide corresponding image data,
a processing and control unit (6) designed to process the captured image data and to control the manufacturing process of the device (100) based on the image data retrieved by the camera unit (5).

2. The device according to claim 1, wherein the camera unit (5) is arranged to capture at least one image of a respective front cut section and/or rear cut section (21a,b) of each individual tube body (20).

3. The device according to claim 1 or 2, wherein the camera unit (5) is arranged to capture at least one image of a cross-section (21c) of the seam region (10) in a respective front cut section and/or rear cut section (21a,b) of each individual tube body (20).

4. The device according to any of the preceding claims, wherein the camera unit (5) comprises one or more image capturing devices (5a,b,c) capable of capturing image or recording video images.

5. The device according to any of the preceding claims, wherein the camera unit (5) is designed to operate synchronized with at least one further unit of the device, preferably at least with the cutting unit (3) and in such a way that the moment of image capturing *tₚ* by the camera unit (5) is synchronized with the moment of cutting *t_{c}* carried out by the cutting unit (3).

6. The device according to any of the preceding claims, wherein the camera unit (5) is arranged to capture the image data dependent on an operational state of the cutting unit (3), and is particularly designed to capture the image data before, during and/or after a cutting of each successive tube body (20) is carried out by the cutting unit (3).

7. The device according to any of the preceding claims, wherein the camera unit (5) is located between the cutting unit (3) and the optional header unit (4), and is further designed to capture the image data during the transportation of the tube body (20) to the header unit (4).

8. The device according to any of the preceding claims, wherein the camera unit (5) comprises one or more lenses (23) with the required focal lengths suited for capturing images of features on or near to the cut sections of the endless tubular sleeve and/or the tube body.

9. The device according to any of the preceding claims, wherein the camera unit (5) comprises one or more mirrors for redirecting and/or deflecting light from the cut sections (21a,b) to an image capturing device of the camera unit (5).

10. The device according to any of the preceding claims, wherein the camera unit (5) comprises at least one movable support (25a) for an image capturing device and/or a mirror of the camera unit (5), which is preferably designed to carry out a translational and/or rotational movement synchronized to the movement of the tube body (20) during exposure time in the device.

11. The device according to any of the preceding claims, wherein the camera unit (5) is designed to capture image data when a respective front cut section (21a) and/or rear cut section (21b) and preferably the cross-section (21c) of a side seam region (10) in a front cut section (21a) and/or a rear cut section (21b) of the tube body (20) is located in a focus plane of an image capturing device of the camera unit (5).

12. The device according to any of the preceding claims, wherein an image capturing device of the camera unit (5) is designed to provide an image resolution of a seam region of the tube body (20) of preferably higher than 200 px x 50 px.

13. The device according to any of the preceding claims, wherein the camera unit (5) comprises an additional image capturing device designed to capture secondary image data in particular of a seam side surface for the detection of printing defects such as cracks or other surface defects.

14. The device according to any of the preceding claims, wherein the device (100) further comprises a removal unit (9) able to prevent tube bodies (20) from being further processed in the device (100), the removal unit (9) being designed to be controlled in response to a feedback signal of the processing and control unit (6).

15. The device according to any of the preceding claims, wherein the device (100) further comprises a user interface and/or visualisation unit (22) designed for displaying latest images and associated meta data of the captured image data and designed to act as a data interface to additional units of the device.

16. The device according to any of the preceding claims, wherein the endless web (13) is a laminate material, preferably a polymer-based or a paper-based laminate material.

17. The device according to any of the preceding claims, wherein the side seaming unit (2) is designed to contact the endless web (14) by means of welding, soldering, gluing, punching or stitching.

18. The device according to any of the preceding claims, wherein the device further comprises at least one lighting unit (24) designed to illuminate the endless tubular sleeve and/or a respective tube body cut from the sleeve, preferably the cut sections thereof, and wherein the lighting unit (24) comprises one or more LEDs, OLEDs, laser diodes, filament, and/or strobe lights.

19. A method for continuously manufacturing tube bodies from at least one endless web of material, preferably with a device according to any of the preceding claims, the method comprising the steps of:
- supplying at least one or more endless webs of tube material to a tube manufacturing device,
- forming an endless tubular sleeve by connecting opposite lateral portions of the at least one endless web under formation of a seam region,
- cutting the endless tubular sleeve into tube bodies (20) of predetermined length,
- capturing an image of at least one cut section (21a,b) of the endless tubular sleeve (13) and/or the tube bodies (20) and provide corresponding image data,
- processing of the captured image data, and
- controlling parameters of the tube manufacturing process based on the processed image data.
